(19) Europäisches Patentamt
European Patent Office
Office européen des brevets

(11) **EP 3 473 997 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(51) Int Cl.:
***G01N 3/20*** *(2006.01)*

(21) Anmeldenummer: **18195718.4**

(22) Anmeldetag: **20.09.2018**

(54) **VERFAHREN UND VORRICHTUNG ZUR DYNAMISCHEN BELASTUNGSPRÜFUNG**

METHOD AND DEVICE FOR DYNAMIC LOAD TESTING

PROCÉDÉ ET DISPOSITIF D'ESSAI DYNAMIQUE DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2017 DE 102017123275**

(43) Veröffentlichungstag der Anmeldung:
**24.04.2019 Patentblatt 2019/17**

(73) Patentinhaber: **Bundesrepublik Deutschland, vertreten durch den Bundesminister für Wirtschaft und Energie, dieser vertreten durch den Präsidenten der 12205 Berlin (DE)**

(72) Erfinder: **Auster, Jürgen 12487 Berlin (DE)**

(74) Vertreter: **Zimmermann & Partner Patentanwälte mbB Postfach 330 920 80069 München (DE)**

(56) Entgegenhaltungen:
**WO-A2-2011/157261 DE-A1- 3 344 841**

• **D.D. ANDERSON ET AL: "Comparison of three real time techniques for the measurement of dynamic fracture initiation toughness in metals", ENGINEERING FRACTURE MECHANICS, Bd. 72, Nr. 4, 1. März 2005 (2005-03-01), Seiten 535-555, XP55563046, AMSTERDAM, NL ISSN: 0013-7944, DOI: 10.1016/j.engfracmech.2004.04.005**

EP 3 473 997 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur dynamischen Belastungsprüfung, insbesondere zur dynamischen Belastungsprüfung stab- oder balkenförmiger Biegeproben, sowie eine entsprechende Vorrichtung.

Zur Ermittlung von bruchmechanischen Kennwerten werden standardmäßig Belastungsprüfungen mittels Dreipunktbiegeversuchen (3PBT, von englisch "three-point bending test") an stabförmigem Proben durchgeführt. Hauptmessgrößen bei Dreipunktbiegeversuchen an stabförmigem Proben sind die während der Belastungsprüfung wirkende Normalkraft und die daraus resultierende Durchbiegung der Probe.

Insbesondere bei dynamischen Belastungsprüfungen mittels 3PBT werden wegen der zeitlichen Kürze (typischerweise im Millisekundenbereich) der versuchsrelevanten Ereignisse besonders hohe Anforderungen an die einzusetzende Messtechnik und an die sich anschließende Auswertung und Interpretation der Messdaten gestellt. Insbesondere ist die Bestimmung des zur Ableitung von bruchmechanischen Materialkennwerten wichtigen Zeitpunktes der Rissinitiierung bzw. des Einsetzens einer Querschnittsänderung anhand der vorliegenden Kraftund Durchbiegungsmessdaten bei dynamischen Belastungsprüfungen mittels 3PBT häufig zu ungenau. Dies gilt besonders für die sogenannten dynamischen "full-blow" Belastungsprüfungen, bei denen sich vorwiegend sprödes Rissverhalten zeigt und die Probe durch ein Spaltbruchereignis geschädigt wird. Die bei der dynamischen Untersuchung von stabförmigen Proben bestimmten, auf die instrumentierte Probe wirkenden Maximalkräfte entsprechen häufig nicht den Rissinitiierungskraftbeträgen. Vielmehr liegen die auf die instrumentierte Probe wirkenden Kräfte zum Zeitpunkt der Rissinitiierung in vielen Fällen unterhalb der zu den entsprechenden dynamischen Belastungsversuchen registrierten Maximalkräfte.

In der Publikation "Comparison of three real time techniques for the measurement of dynamic fracture initiation toughness in metals" von D. D. Anderson & A. J. Rosakis, erschienen in Engineering Fracture Mechanics 72 (2005) 535-555 werden drei Techniken zur Messung der Zeitverläufe des dynamischen Spannungsintensitätsfaktors von dynamisch belasteten stationären Modus-I-Rissen verglichen, wie sie auf dynamisch belastete angerissene 6A1-4V Titanlegierungsproben angewendet werden. Die drei Techniken sind Rissöffnungsverschiebung, dynamische DMS-Messung und kohärente Gradientenmessung. Die Historien der Spannungsintensitätsfaktoren werden aus jeder Messtechnik abgeleitet und dienen dazu, die kritische dynamische Einleitungszähigkeit als Funktion der Belastungsrate zu erhalten. Es gibt signifikante Unterschiede in der Umsetzung und den Informationen, die aus jeder der drei Messverfahren gewonnen werden, obwohl für die durchgeführten Tests alle sehr ähnliche Ergebnisse liefern. Die DE 3044841 A1 beschreibt ein Verfahren zum Bestimmen der Schlagbruchzähigkeit von Werkstoffen durch Schlagversuche mit Biegeproben, die einen künstlichen Anriß aufweisen, wobei mittels einer schattenoptischen Kaustikenmethode die Schlagreaktionskurve für die jeweilige Belastungsanordnung und Probengeometrie bestimmt wird, in einem Schlagversuch die Brucheinsatzzeit einer entsprechenden Probe aus dem zu untersuchenden Werkstoff gemessen wird, und aus der gemessenen Brucheinsatzzeit mit Hilfe der Schlagreaktionskurve die Schlagbruchzähigkeit des Werkstoffes der Biegeprobe ermittelt wird. Außerdem beschreibt die WO 2011/157261 A2 ein Verfahren zur optischen Kraftmessung, bei dem ein elastisch verformbarer und/oder ein sich elastisch verformender Bereich eines Festkörpers durch Einwirkung einer Kraft einer Änderung seiner Geometrie unterworfen wird, die durch die Einwirkung der Kraft bewirkte Änderung der Geometrie des Bereichs optisch erfasst wird und die die Änderung der Geometrie bewirkende Kraft anhand eines vorbestimmten, bevorzugt eineindeutigen Kraft-Geometrieänderungs-Zusammenhangs aus der optisch erfassten Änderung der Geometrie berechnet wird.

Zur Bestimmung des Zeitpunktes der Rissinitiierung können auch sogenannte Rissmessstreifen (RMS) eingesetzt werden. Ausgelöst durch das Reißen einzelner Leiterbahnen, detektiert der RMS den Zeitpunkt der Rissinitiierung durch eine sprunghafte Signaländerung. Diese Methode ist jedoch fehleranfällig. Insbesondere bei "low-blow" Belastung kann es vorkommen, dass die Leiterbahnen des RMS nicht reißen, obgleich mittels späterer Vermessung der Bruchflächen ein Risswachstum nachzuweisen ist. Eine Aussage zum Zeitpunkt der Rissinitiierung ist in diesen Fällen wegen des Fehlens einer zuverlässigen Methodik nicht möglich. Außerdem sind die aus statischen Belastungsprüfungen bekannten, DMS (Dehnungsmessstreifen) -instrumentierten Messclips zur Messung der Rissaufweitung bei dynamischen Belastungsprüfungen unbrauchbar.

Im Hinblick auf das oben Gesagte, schlägt die vorliegende Erfindung ein Verfahren zur dynamischen Belastungsprüfung gemäß Anspruch 1 und eine Vorrichtung zur dynamischen Belastungsprüfung gemäß Anspruch 10 vor.

Gemäß einem Ausführungsbeispiel umfasst ein Verfahren zur dynamischen Belastungsprüfung ein dynamisches Belasten einer Biegeprobe aufweisend eine erste Seitenfläche, einen sich bis zur ersten Seitenfläche erstreckenden Einschnitt, eine auf und/oder an der ersten Seitenfläche angeordnete erste Markierung und eine auf und/oder an der ersten Seitenfläche angeordnete zweite Markierung. In einer Aufsicht auf die erste Seitenfläche liegt ein Endbereich des Einschnitts auf einer gedachten Verbindungslinie zwischen der ersten Markierung und der zweiten Markierung. Ein sich während des dynamischen Belastens ändernder Abstand zwischen der ersten Markierung und der zweiten Markierung wird bestimmt. Ein Zeitpunkt des Einsetzens eines Wachstums des Einschnitts wird bestimmt. Das Bestimmen des Zeitpunktes des Einsetzens des Wachstums des Einschnitts umfasst ein Bestimmen einer Änderungsrate des sich während des dynamischen Belastens ändernden Abstands zwischen der ersten Markierung und der zweiten Markierung.

Der Einschnitt kann eine Kerbe und/oder einen Riss, typischer einen Ermüdungsriss, noch typischer einen eingeschwungenen Ermüdungsriss umfassen. Dabei erstreckt sich der Riss typischerweise von der Kerbe aus weiter in die Biegeprobe hinein.

Typischerweise wird der Abstand zwischen der ersten Markierung und der zweiten Markierung als Funktion der Zeit während des dynamischen Belastens optisch, d.h. mittels optischer Verfahren bestimmt. Gemäss der Erfindung werden von einer Bildaufnahmevorrichtung während des dynamischen Belastens Bilder aufgenommen, die jeweils die erste und die zweite Markierung zeigen, und der jeweilige Abstand der ersten und zweiten Markierung voneinander mittels Bildauswertung ermittelt. Bei der Bildaufnahmevorrichtung kann es sich um eine Kamera, typischerweise um eine Hochgeschwindigkeitskamera handeln.

Zur Bildauswertung kann eine Trackingsoftware verwendet werden, die z.B. in den Bildern jeweilige Positionen, typischerweise Mittelpunkts- und/oder Randkoordinaten der ersten Markierung und der zweiten Markierung bestimmt. Bei gegebenen bzw. gewählter Bildaufnahmerate der Bildaufnahmevorrichtung lässt sich der zeitabhängige Abstand zwischen der ersten Markierung und der zweiten Markierung aus den Mittelpunkts- und/oder Randkoordinaten und der Bildnummer einer aufgenommen Bildsequenz während des dynamischen Belastens einfach berechnen.

Typischerweise werden die erste und zweite Markierung so gewählt, dass sie einen hohen optischen Kontrast zum Probekörper darstellen. Beispielsweise können gut Licht absorbierende erste und zweite Markierungen, z.B. dunkle oder sogar schwarze Markierungen auf einem metallisch glänzenden Probekörper, oder gut Licht reflektierende erste und zweite Markierungen auf einem gut Licht absorbierenden Probekörper verwendet werden. Typischerweise werden auch Eindringkörper aus der Härteprüfung zum Einprägen der ersten und zweiten Markierung in die Oberfläche der Probekörper verwendet.

Die erste und zweite Markierung können sogar als ein jeweiliges Leuchtmittel, typischerweise als LED ausgeführt sein. Dadurch wird die Messung licht- und somit wärmetechnisch weniger aufwändig. Zudem kann die Bildaufnahme/Abtastrate der Kamera bei einer Verwendung von aktiven Leuchtmitteln häufig höher gewählt werden. Außerdem kann sich die Bildauswertung vereinfachen, da in den Bildern nur nach den beiden Spots höchster Intensität zu suchen ist.

Es zeigt sich, dass sich der Zeitpunkt des Einsetzens des Wachstums des Einschnitts während des dynamischen Belastens der Probe sehr genau und zuverlässig aus dem zeitabhängigen Abstand zwischen der ersten Markierung und der zweiten Markierung während des dynamischen Belastens bestimmen lässt. Außerdem zeigt sich, dass der derart bestimmte Zeitpunkt des Einsetzens des Wachstums des Einschnitts sehr gut mit dem aus einer Auswertung des Schwingungsverhaltens der Probe (insbesondere einer auf einer Schwingungsmoden- bzw. Modalanalyse der Biegeprobe basierenden Auswertung, wie sie in der Deutschen Patentanmeldung Nr. 102017112776.3 beschrieben wird) ermittelten Zeitpunkt übereinstimmt, bei dem eine Querschnittsänderung der Biegeprobe während des dynamischen Belastens einsetzt. Eine genauere Analyse zeigt, dass der aus dem zeitabhängigen Abstand zwischen der ersten Markierung und der zweiten Markierung bestimmte Zeitpunkt des Einsetzens des Wachstums des Einschnitts sogar - wenn auch typischerweise geringfügig - genauer dem Zeitpunkt der Rissinitiierung entsprechen kann als der über die Auswertung des Schwingungsverhaltens der Probe bestimmte Zeitpunkt. Dies kann daran liegen, dass sich eine Änderung der Schwingungsmoden der Probe erst kurz nach der Rissinitiierung manifestiert, da sich die Schwingungsmoden in der gesamten (ausgedehnten) Probe einstellen bzw. ändern.

Mit der auf dem Bestimmen der Änderungsrate des Abstands der ersten Markierung und der zweiten Markierung basierenden Methode kann der Zeitpunktes des Einsetzens eines Wachstums des Einschnitts und daher der damit identifizierter Zeitpunkt der Rissinitiierung somit hochgenau, zuverlässig und zudem relativ einfach bestimmt werden. Entsprechend genau lassen sich abgeleitete dynamische Bruchzähigkeitskennwerte wie z.B. die in den Standards *("Standard Test Method for Measurement of Fracture Toughness"* ASTM E1820 - 11 bzw. "Fracture mechanics toughness tests - Part 3" BS 7448-3:2005) definierten Werte $K_{Ic}$, $J_{Ic}$ bzw. $\delta_c$ berechnen, die insbesondere auf der hinreichend genauen Kenntnis des Zeitpunktes des Beginns des Risswachstums basieren.

Der "Zeitpunktes des Einsetzens des Wachstums des Einschnitts" wird im Folgenden auch kurz als Wachstumsinitiierungszeitpunkt bezeichnet.

Die Änderungsrate des Abstands zwischen der ersten Markierung und der zweiten Markierung kann einfach und schnell durch nummerisches Differenzieren des Abstands nach der Zeit bestimmt werden.

Der Wachstumsinitiierungszeitpunkt (Zeitpunkt des Einsetzens des Wachstums des Einschnitts) kann dann als die Zeit bestimmt werden, bei der eine ansteigende Flanke der Änderungsrate zu einem globalen Maximum der Änderungsrate einem mittleren Wert der Änderungsrate der Flanke entspricht. Diese Auswertung ist deutlich einfacher und schneller als eine (zum Vergleich angestellte) Analyse der Rissentwicklung anhand der aufgenommenen Bilder, die zudem erhöhte Anforderungen an die Optik und/oder die Kamera stellt, und als eine auf sich während des Belastens ändernden Schwingungsmoden der Probe basierende Analyse.

Da es bei der Berechnung des Wachstumsinitiierungszeitpunkts nur auf die relative Änderungsrate des Abstands zwischen der ersten Markierung und der zweiten Markierung ankommt, können Abstand und Änderungsrate auch in Pixeln der Bilder bzw. Pixeln/s bestimmt werden.

Weiterhin kann die zum Wachstumsinitiierungszeitpunkt auf die Biegeprobe wirkenden Kraft bestimmt und/oder unter Verwendung der zum Wachstumsinitiierungszeitpunkt auf die Biegeprobe wirkenden Kraft ein oder mehrere bruchmechanische Materialkennwerte, wie die dynamische Bruchzähigkeit $K_{Ic}$ nach dem K-Konzept oder das kritische J-Integral $J_{Ic}$, nach dem J-Integralkonzept bzw. die kritische Rissöffnung $\delta_c$ nach dem CTOD-Konzept ("Crack tip opening displacement") bestimmt werden.

Als Kraftsensor kann ein an der Biegeprobe befestigter DMS (Dehnungsmessstreifen, engl. strain gauges) oder eine DMS -Voll- bzw. Halbbrücke verwendet werden.

Die Bestimmung der auf die Biegeprobe zum Wachstumsinitiierungszeitpunkt wirkendenden Kraft gestaltet sich besonders einfach, wenn ein kalibrierter Kraftsensor verwendet wird.

Außerdem kann ein Betrag einer Durchbiegung der Biegeprobe zum Wachstumsinitiierungszeitpunkt bestimmt werden.

Weiterhin kann eine beim dynamischen Belasten an der Biegeprobe vom zum Zeitpunkt $t_0$ des Beginns des dynamischen Belastens bis zum Wachstumsinitiierungszeitpunkt $t_c$ verrichtete Biegearbeit W durch numerische Integration der auf die Biegeprobe wirkenden Kraft F über der Durchbiegung w als

$$W = \int_{t_0}^{t_c} F\big(w(t)\big)dw$$

ermittelt werden.

Entsprechend des oben erwähnten ASTM-Standards beträgt der Abstand zwischen der ersten Markierung und der zweiten Markierung vor dem dynamischen Belasten typischerweise 5 mm ($\delta$5-Methode nach CTOD-Konzept). Derartig an der Biegeprobe befindliche erste Markierung und zweite Markierung werden im Folgenden auch als $\delta$5-Marken bezeichnet.

Außerdem ist die Anordnung des Einschnitts und der ersten Markierung und der zweiten Markierung vor dem dynamischen Belasten typischerweise zumindest in etwa spiegelsymmetrisch bzgl. einer durch den Einschnitt verlaufenden Spiegelachse. So kann ein Endbereich des Einschnitts vor dem dynamischen Belasten einen ersten Abstand zu der ersten Markierung aufweist, der nicht mehr als 20 % oder sogar nicht mehr 10% oder 5% von einem zweiten Abstand des Endbereichs des Einschnitts zu der zweiten Markierung abweichen.

Vor dem dynamischen Belasten tangiert oder schneidet die gedachte Verbindungslinie in der Aufsicht einen Endbereich des Einschnitts, typischerweise einen von der Kerbe abgewandt angeordneten Endbereich des Risses. Dadurch kann eine besonders hohe Messgenauigkeit erreicht werden.

Die zeitliche Auflösung bei der Bestimmung des Abstands zwischen der ersten Markierung und der zweiten Markierung kann von der Biegeprobe bzw. der erwarteten Zeit des Wachstums des Einschnitts (Risses) abhängen. Um bspw. ein Ereignis bzw. sinusförmiges Signal von 0,15 ms Dauer sicher nachzuweisen, ist eine zeitliche Auflösung von zumindest 53,4 kHz wünschenswert.

Typischerweise wird daher der Abstand zwischen der ersten Markierung und der zweiten Markierung für eine Biegeprobe in Form eines metallischen Gusskörpers mit einer zeitlichen Auflösung von mehr als 40 kHz, von zumindest 50 kHz und/oder sogar mindestens 54 kHz bestimmt.

Der Abstand zwischen der ersten Markierung und der zweiten Markierung wird während des dynamischen Belastens typischerweise in einer typischerweise durch die erste Seitenfläche definierten Ebene mit einer die Messgenauigkeit von zumindest 10 μm oder sogar 7 μm bestimmt. Beispielsweise können die Positionen der ersten Markierung und die Positionen der zweiten Markierung in den während des dynamischen Belastens erzeugten (Kamera-) Bildern mittels der Trackingsoftware mit einer Auflösung von zumindest ± 5,0 μm oder sogar mindestens ± 3,5 μm bestimmt werden. Eine derzeit schwer realisierbare Auflösung von unterhalb ± 1 μm ist typischerweise aber nicht erforderlich.

Das dynamische Belasten der Biegeprobe erfolgt typischerweise schlag-bzw. impulsartig, d.h. in relativ kurzen Zeiträumen von bspw. maximal 20 ms oder sogar von maximal 10 ms.

Bei den dynamischen Belastungen können je nach Materialbeschaffenheit Kräfte von mindestens 0,5 kN oder sogar von mindestens 50 kN auf die Biegeprobe wirken.

Vor dem dynamischen Belasten der Biegeprobe kann die erste Seitenfläche der Biegeprobe mit der ersten Markierung und der zweiten Markierung versehen oder auf der ersten Seitenfläche angebracht werden. Dies erfolgt typischerweise so, dass die erste Markierung und die zweite Markierung nicht direkt miteinander verbunden sind.

Beispielsweise können die erste Markierung und die zweiten Markierung aufgeklebt oder aufgemalt bzw. aufgesprüht werden, wozu typischerweise eine Maske verwendet wird.

Die erste Markierung und die zweiten Markierung können aber auch mittels eines Präge- oder Gravurprozesses, z.B. als Lasergravur oder mittels Härteprüfkörper an der ersten Seitenfläche erzeugt werden.

Um eine möglichst definierte Rissbildung während des dynamischen Belastens zu ermöglichen, kann zuvor eine Kerbe oder Kerbung ("Sollbruchstelle") in der Biegeprobe erzeugt und ggf. ein typischerweise von einer Kante der Kerbe oder Kerbung ausgehender Ermüdungsriss eingeschwungen werden, z.B. ein Ermüdungsriss mit einer vorgegebenen Länge.

Typischerweise wird das Verfahren als dynamischer Dreipunktbiegeversuch durchgeführt, d.h. vor dem dynamischen Belasten wird die Biegeprobe an zwei Stellen, z.B. Endabschnitten, linienartig aufgelagert bzw. sogar fixiert. Beispielsweise kann die Biegeprobe an 2 Linien gelagert und an einer dritten Linie belastet werden (3Linien-Lagerung - 3L-Lagerung).

Alternativ oder ergänzend dazu kann das dynamische Belasten bei einer 2Linien-Lagerung (2L-Lagerung) und/oder einer frei-frei-Lagerung (ff-Lagerung) erfolgen. Bei einer 2L-Lagerung ruht die Probe auf zwei Linien und wird nicht von einer dritten Linie belastet. Diese Lagerung tritt typischerweise dann auf, wenn das Belastungswerkzeug (Prüfstempel, Finne) vor dem initialen, impulsartigen Belasten noch keinen Kontakt zur Biegeprobe sowie nach dem initialen, impulsartigen Belasten keinen Kontakt mehr zur Biegeprobe hat. Eine ff-Lagerung tritt auf wenn die Probe infolge von auftretenden Biegeschwingungen von den zwei Auflagerlinien während der dynamischen Belastungsprüfung abhebt und das Belastungswerkzeug (Prüfstempel, Finne) keinen Kontakt zur Biegeprobe hat.

Weiterhin kann vor dem dynamischen Belasten der Biegeprobe ein Signal des Abstands zwischen der ersten Markierung und der zweiten Markierung als Startwert und/oder zu Kalibrierungszwecken sowie zur Bestimmung der Messungenauigkeit bestimmt werden.

Gemäß einem Ausführungsbeispiel weist eine Vorrichtung zur dynamischen Belastungsprüfung eine Probenaufnahme zur Lagerung einer Biegeprobe, eine Belastungsvorrichtung, die eingerichtet ist, die in der Probenaufnahme gelagerte Biegeprobe mit einer Biegekraft dynamisch zu belasten, eine Bildaufnahmevorrichtung und eine Steuer- und Auswerteeinheit, die mit der Belastungsvorrichtung und der Bildaufnahmevorrichtung gekoppelt ist, auf. Die Biegeprobe weist eine erste Seitenfläche, einen sich bis zur ersten Seitenfläche erstreckenden Einschnitt, eine auf und/oder an der ersten Seitenfläche angeordnete erste Markierung, und eine auf und/oder an der ersten Seitenfläche angeordnete zweite Markierung auf. In einer Aufsicht auf die erste Seitenfläche liegt ein Endbereich des Einschnitts auf einer gedachten Verbindungslinie zwischen der ersten Markierung und der zweiten Markierung. Die Bildaufnahmevorrichtung ist eingerichtet, Bilder von zumindest einem Abschnitt der ersten Seitenfläche der in der Probenaufnahme gelagerten Biegeprobe aufzunehmen, so dass auch die erste Markierung und die zweite Markierung abgebildet werden. Die Steuer- und Auswerteeinheit ist eingerichtet, ein dynamisches Belasten der Biegeprobe mittels der Belastungsvorrichtung auszulösen, eine Bild- oder Bilderserienaufnahme der Bildaufnahmevorrichtung auszulösen, in während des dynamischen Belastens von der Bildaufnahmevorrichtung aufgenommenen und an die Steuer- und Auswerteeinheit übertragenen Bildern einen jeweiligen Abstand zwischen der ersten Markierung und der zweiten Markierung zu bestimmen, und zum Bestimmen eines Zeitpunktes des Einsetzens eines Wachstums des Einschnitts eine Änderungsrate des Abstands zwischen der ersten Markierung und der zweiten Markierung zu bestimmen.

Mit dieser Vorrichtung zur dynamischen Belastungsprüfung lässt sich der Wachstumsinitiierungszeitpunkt vergleichsweise einfach, reproduzierbar und sehr genau ermitteln. Dementsprechend lassen sich auch darauf basierende bruchmechanische Kennwerte sehr genau ermitteln.

Typischerweise weist die Belastungsvorrichtung ein geführtes Fallwerk oder ein Pendelschlagwerk auf. Damit lassen sich besonders definierte dynamische Belastungsprüfungen vornehmen. Die Belastungsvorrichtung kann aber auch ein freies Fallwerk aufweisen.

Typischerweise ist die Vorrichtung eingerichtet, dynamische Dreipunktbiege-Belastungsprüfung an der Biegeprobe vorzunehmen. Dazu weist sie zwei Auflagen auf, auf denen die Biegeprobe (im Folgenden auch als Prüfling bezeichnet) positioniert werden kann und die so zur Belastungsvorrichtung angeordnet sind, dass deren Prüfstempel (Finne) die Biegeprobe in der Mitte belasten kann.

Als Prüfstempel der Belastungsvorrichtung kann ein Stempel oder eine Finne, instrumentiert mit einem Einzel-DMS oder mehreren DMS zu einer DMS-Halb- bzw. Vollbrücke verdrahtet der/die das Registrieren der eingeleiteten Kraft während des dynamischen Belastens erlaubt oder uninstrumentiert verwendet werden.

Außerdem kann die Vorrichtung einen (weiteren) an der Biegeprobe befestigten kalibrierbaren Kraftsensor, z.B. in Form einer DMS-Vollbrücke, bestehend aus vier DMS, einer DMS-Halbbrücke, bestehend aus zwei DMS oder eines Einzel-DMS aufweisen. Dies ermöglicht eine Bestimmung der zum Wachstumsinitiierungszeitpunkt auf die Biegeprobe wirkenden Kraft (Biegekraft).

Mit dieser Vorrichtung zur dynamischen Belastungsprüfung lässt sich der Zeitpunkt, bei dem eine Querschnittsänderung der Biegeprobe während des dynamischen Belastens einsetzt, reproduzierbar und sehr genau ermitteln. Dementsprechend lassen sich auch darauf basierende bruchmechanische Kennwerte sehr genau ermitteln.

Bei der Bildaufnahmevorrichtung kann es sich um eine Kamera, bspw. eine CCD-Kamera, typischerweise um eine Hochgeschwindigkeitskamera handeln.

Insbesondere wenn die erste Markierung und die zweite Markierung von einem jeweiligen (quasi) punktförmigen Leuchtmittel, insbesondere einer LED gebildet werden, kann die Bildaufnahmevorrichtung auch von einem (optischen) Zeilensensor, insbesondere einer CCD-Zeile, sowie einer geeigneten Optik gebildet werden. Damit lassen sich relativ kostengünstig sehr schnelle Aufnahmen und Auswertalgorithmen realisieren.

Der Begriff "Bild", wie er vorliegenden verwendet wird, soll neben zwei- bzw. dreidimensionalen Abbildern eines Objekts, z.B. eine Matrix von Bildpunkten des Objekts, auch eindimensionale Abbilder eines Objekts, z.B. einen Vektor von Bildpunkten des Objekts oder eine Zeile von Bildpunkten (Bildzeile) des Objekts beschreiben.

Die Bildaufnahmevorrichtung kann dementsprechend eine Aufnahmevorrichtung sein, die eingerichtet ist, ein Bild bestehend aus und/oder aufweisend eine Zeile mit Bildpunkten eines Objektes zu erzeugen.

Gemäß einem Ausführungsbeispiel weist eine Vorrichtung zur dynamischen Belastungsprüfung eine Probenaufnahme zur Lagerung einer Biegeprobe, eine Belastungsvorrichtung, die eingerichtet ist, die in der Probenaufnahme gelagerte Biegeprobe mit einer Biegekraft dynamisch zu belasten, eine Aufnahmevorrichtung und eine Steuer- und Auswerteeinheit, die mit der Belastungsvorrichtung und der Aufnahmevorrichtung gekoppelt ist, auf. Die Biegeprobe weist eine erste Seitenfläche, einen sich bis zur ersten Seitenfläche erstreckenden Einschnitt, eine auf und/oder an der ersten Seitenfläche angeordnete erste Markierung, und eine auf und/oder an der ersten Seitenfläche angeordnete zweite Markierung auf. In einer Aufsicht auf die erste Seitenfläche liegt ein Endbereich des Einschnitts auf einer gedachten Verbindungslinie zwischen der ersten Markierung und der zweiten Markierung. Die Aufnahmevorrichtung ist eingerichtet, ein Bild bestehend aus und/oder aufweisend eine Zeile mit Bildpunkten von zumindest einem Abschnitt der ersten Seitenfläche der in der Probenaufnahme gelagerten Biegeprobe zu erzeugen, so dass die Zeile jeweils mindestens einen Bildpunkt der ersten Markierung und der zweiten Markierung enthält. Die Steuer- und Auswerteeinheit ist eingerichtet, ein dynamisches Belasten der Biegeprobe mittels der Belastungsvorrichtung auszulösen, eine Bild- oder Bilderserienaufnahme der Aufnahmevorrichtung auszulösen, in während des dynamischen Belastens von der Aufnahmevorrichtung aufgenommenen und an die Steuer- und Auswerteeinheit übertragenen Bildern einen jeweiligen Abstand zwischen der ersten Markierung und der zweiten Markierung zu bestimmen, und zum Bestimmen eines Zeitpunktes des Einsetzens eines Wachstums des Einschnitts eine Änderungsrate des Abstands zwischen der ersten Markierung und der zweiten Markierung zu bestimmen.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1 eine Vorderansicht einer Vorrichtung zur dynamischen Belastungsprüfung einer Biegeprobe gemäß einem Ausführungsbeispiel;

Fig. 2 eine Rückansicht der in Fig. 1 dargestellten Vorrichtung gemäß einem Ausführungsbeispiel;

Fig. 3 eine schematische Darstellung der Bruchfläche einer Biegeprobe nach einer dynamischen Belastung in einer Vorrichtung gemäß der Figuren 1 und 2;

Fig. 4 eine schematische Darstellung einer Vorrichtung zur dynamischen Belastungsprüfung einer Biegeprobe gemäß einem Ausführungsbeispiel;

Fig. 5A ein Knotenmodell der Biegeprobe mit zwei Markierungen in einem unbelasteten Zustand gemäß einem Ausführungsbeispiel;

Fig. 5B das in Fig. 5A dargestellt Knotenmodell der Biegeprobe mit den zwei Markierungen in einem elastischen Bereich während einer dynamischen Belastungsprüfung gemäß einem Ausführungsbeispiel;

Fig. 5C das in Fig. 5A dargestellt Knotenmodell der Biegeprobe mit den zwei Markierungen nach einem Überschreiten der dynamischen Bruchzähigkeit der Biegeprobe während der dynamischen Belastungsprüfung gemäß einem Ausführungsbeispiel;

Fig. 6 eine Bilderserie einer Biegeprobe mit zwei Markierungen während einer dynamischen Belastungsprüfung gemäß einem Ausführungsbeispiel;

Fig. 7 ein gemessener Abstand zwischen zwei Markierungen einer Biegeprobe als Funktion der Zeit während eines dynamischen Belastens gemäß einem Ausführungsbeispiel;

Fig. 8 ein aus dem in Fig. 7 dargestellten Abstand berechnete Änderungsrate des Abstands zwischen zwei Markierungen als Funktion der Zeit während des dynamischen Belastens gemäß einem Ausführungsbeispiel;

Fig. 9 die in Fig. 8 dargestellte Änderungsrate des Abstands zwischen zwei Markierungen sowie der daraus ermittelte Zeitpunkt des Einsetzens eines Risswachstums gemäß einem Ausführungsbeispiel;

Fig. 10 ein während des dynamischen Belastens bestimmte Kraft als Funktion der Zeit mit dem Zeitpunkt des Einsetzens des Risswachstums gemäß einem Ausführungsbeispiel;

Fig. 11 die in Fig. 10 dargestellte Kraft als Funktion der Zeit sowie einen mittels Rissmessstreifen parallel gemessenen Widerstand als Funktion der Zeit mit dem Zeitpunkt des Einsetzens des Risswachstums bestimmt mit Hilfe des beschriebenen Verfahrens sowie mit dem mittels RMS ermittelten Zeitpunkt des Einsetzens des Risswachstums; und

Fig. 12 Schritte eines Verfahrens zur dynamischen Belastungsprüfung gemäß einem Ausführungsbeispiel.

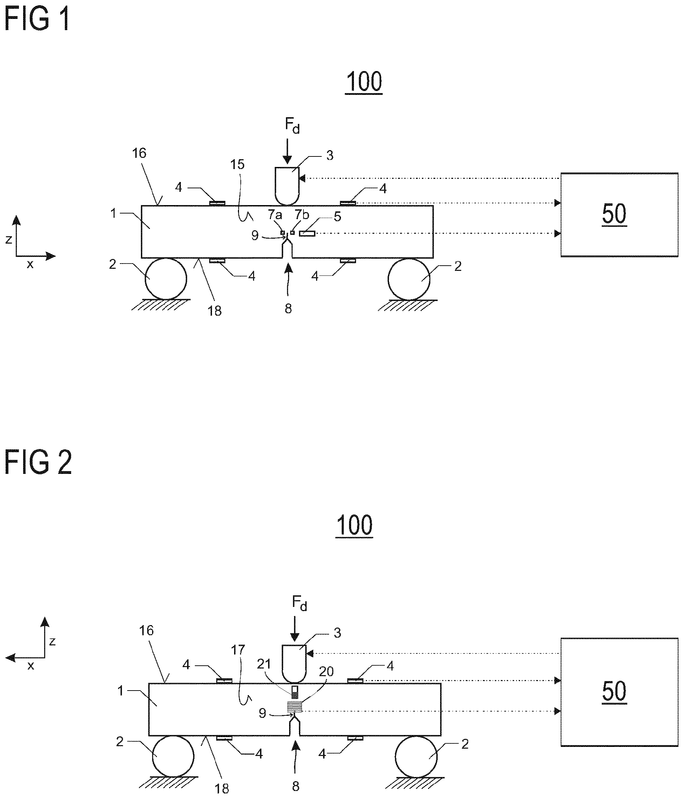

Fig. 1 zeigt eine Vorrichtung 100 zur dynamischen Belastungsprüfung einer Biegeprobe 1 in einer schematischen Seitenansicht auf eine erste Seitenfläche 15 der Biegeprobe 1 (Vorderansicht).

In dem exemplarischen Ausführungsbeispiel ist die Vorrichtung 100 zur Durchführung von dynamischen Dreipunktbiegeversuchen eingerichtet. Dazu kann die Biegeprobe 1 mit ihrer Unterseite 18 auf zylindrischen Walzen 2 einer Probenaufnahme der Vorrichtung 100 gelagert werden, beispielsweise so, dass die Biegeprobe 1 reibungsarm aufliegend ruht, und danach an ihrer gegenüberliegenden Oberseite 16 durch ein z.B. halbzylindrisches Werkzeug 3 einer Belastungsvorrichtung der Vorrichtung 100 wie eine Finne oder einen Stempel mit einer dynamischen Biegekraft $F_d$ belastet werden kann.

Bei der in Fig. 1 dargestellten exemplarischen Biegeprobe 1 handelt es sich um eine stabförmige Biegeprobe mit rechteckigem Querschnitt und einem Einschnitt 8, 9 an der Unterseite 18, d.h. um eine Dreipunkt-Biegeprobe ohne Seitenkerbung (SE(B)-Probe).

Wie in Fig. 1 dargestellt wird, kann der Einschnitt 8 von einer an der Untersite 18 gebildeten Kerbe oder Kerbung 8 und einem von der Kerbe 8 aus sich weiter in die Biegeprobe 1 erstreckenden Riss 9, typischerweise einem Ermüdungsriss 9 gebildet werden.

Die Kerbung 8 ermöglicht zum einen als Querschnittsverringerung die Kräfte für die Prüfmaschine während des dynamischen Belastens zu verringern und zum anderen dem Risswachstum beim dynamischen Belasten eine gewisse Vorzugsrichtung (z) zu geben.

In dem in Fig. 1 dargestellten Ausführungsbeispiel sind an und/oder auf der ersten Seitenfläche 15 eine erste Markierung 7a und eine zweite Markierung 7b angeordnet, und zwar so, dass in der gezeigten Aufsicht auf die erste Seitenfläche 15 ein Endbereich des Risses 9 (und damit ein Endbereich des Einschnitts 8, 9) auf einer nichtdargestellten gedachten Verbindungslinie zwischen der ersten Markierung 7a und der zweiten Markierung 7b liegt.

Beispielsweise kann die gedachte Verbindungslinie in der Aufsicht die Flächenschwerpunkte der beiden Markierungen 7a und 7b verbinden und die Spitze des Risses 9 schneiden oder zumindest tangieren.

Weiterhin kann die in Figur 1 dargestellte Vorrichtung 100 zur dynamischen Belastungsprüfung verwendet werden. Dabei kann das an einer Fallmasse (hier nicht eingezeichnet) spielfrei befestigte Werkzeug 3 der Belastungsvorrichtung (Finne oder Stempel) senkrecht über der Biegeprobe angehoben und zur dynamischen Belastungsprüfung dann annähernd momentenfrei auf die Biegeprobe 1 fallengelassen werden. Dadurch wird die Biegeprobe 1 schlag-bzw. impulsartig mit einer Kraft

$F_d$ belastet, die von einer DMS-Vollbrücke 4 und/oder einem Sensors 5 elektronisch gemessen werden kann.

Eine derartige dynamische Belastungsprüfung, die je nach gewähltem Belastungsenergiebetrag dann häufig bei niedrigen Energieeinträgen auch als "low-blow impact test" oder bei hohen Energieeinträgen auch als "full-blow impact test" bezeichnet wird, kann mit einem geführten Fallwerk, einem freien Fallwerk oder einem Pendelschlagwerk als Belastungseinrichtung ausgeführt werden.

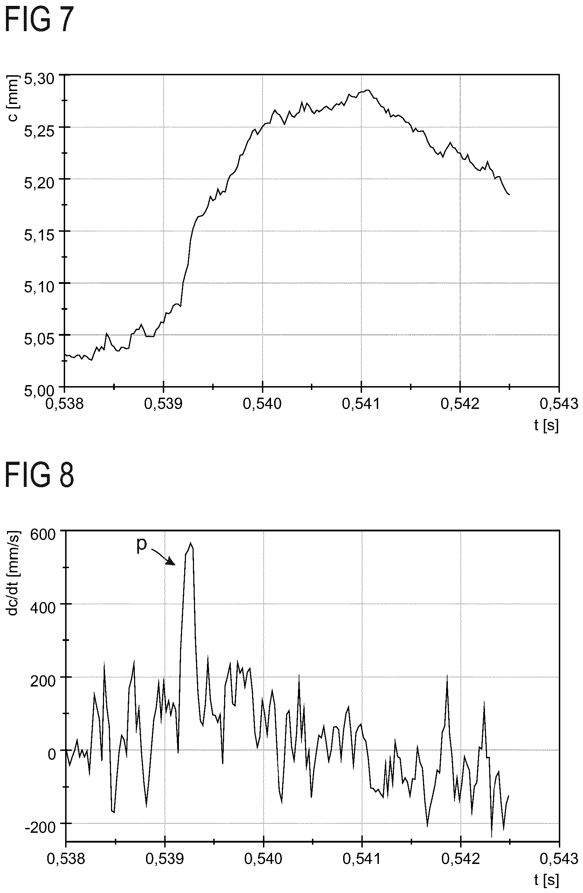

Da sich die Probe während der dynamischen Belastung in z-Richtung durchbiegt und dabei der Riss 9 in x-Richtung aufgeweitet wird , kann die Rissentwicklungsdynamik anhand einer Messung des sich während des dynamischen Belastens ändernden Abstands zwischen der ersten Markierung 7a und der zweiten Markierung 7b (bedingt durch die Rissaufweitung) analysiert werden. Insbesondere kann daraus der Zeitpunkt des Einsetzens des Wachstums des Einschnitts 8, 9 bestimmt werden. Dies wird unten mit Bezug zu den Figuren 7 bis 12 detailliert erläutert.

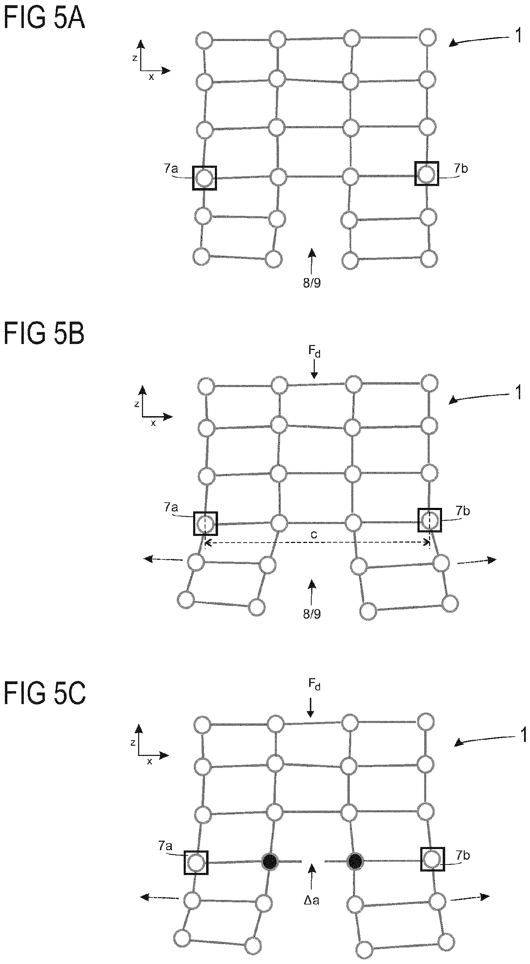

Zunächst wird jedoch mit Bezug zu den Figuren 5A bis 5C der physikalische Hintergrund der Aufweitung des Einschnitts 8, 9 anhand eines jeweils dargestellten, aus kreisförmigen Knoten und Verbindungfasern bestehenden Knotenmodells des Ausschnitts der ersten Seitenfläche 15 im Bereich der Rissspitze der Biegeprobe 1 erläutert.

Dabei illustriert Fig. 5A den unbelasteten Zustand inklusive der beiden Markierungen 7a, 7b, wobei das Knotenmodell so gewählt wurde, dass jede der beiden Markierungen 7a, 7b auf einem (gedachten) Knoten angeordnet ist.

Durch die dynamische Krafteinwirkung $F_d$ wird das Knotenmodell zunächst im elastischen Bereich beansprucht, was in Fig. 5B illustriert wird. Dementsprechend wächst der Abstand c zwischen der ersten Markierung 7a und der zweiten Markierung 7b (entlang der Verbindunglinie) mit der Durchbiegung der Probe 1.

In dieser Phase der dynamischen Belastung biegt sich die Probe 1 zunächst in z-Richtung elastisch durch. Dabei können die mechanische Kerbe 8 und der eingebrachte Ermüdungsriss 9 in x-Richtung aufgeweitet und Bereiche der Rissspitze teilweise plastifiziert werden.

Wenn, wie in Fig. 5C dargestellt ist, die Zugspannung der ersten Verbindungsfaser oberhalb des Einschnitts 8, 9 die werkstoffspezifische Bruchzähigkeitsgrenze überschreitet, kommt es zu einem stoßartigen Anwachsen des Abstandes c (Zeitpunkt der Rissinitiierung).

In dieser Phase der dynamischen Belastung kommt es mit zunehmender Belastung an der Rissspitze dann, je nach Bruchmechanismus (duktil oder spröde) zu einer Form von Risswachstum.

Das Risswachstum $\Delta a$ kann sich ab dem Zeitpunkt der Rissinitiierung stabil oder instabil weiter fortsetzen. Dieses Risswachstum geht bei dessen Initiierung zum Zeitpunkt $t_c$ mit einem sprunghaften Anstieg der Rissaufweitung $\Delta c$ in Höhe der Rissspitze in x-Richtung einher, da sich die durch die Belastung aufgebauten Spannungen zwischen den in Fig. 5C als gefüllte Kreise dargestellten Knoten schlagartig abbauen und diese Knoten sich demzufolge ebenfalls schlagartig in x-Richtung auseinanderbewegen.

Registriert man den Abstand c der Markierungen 7a, 7b als Funktion der Zeit während der dynamischen Belastung mit hinreichend genauer zeitlicher Genauigkeit und Längenmessungsgenauigkeit, so ist ein deutlicher Anstieg der Rissaufweitungsrate zum Zeitpunkt der Rissinitiierung messbar. Aus dieser Messung lässt sich dann der Zeitpunkt der Rissinitiierung $t_c$ direkt ableiten.

Die Validierung dieses Effektes wurde direkt visuell mit Hilfe der Hochgeschwindigkeitsvideoaufzeichnungen von dynamischen full-blow-Belastungsprüfungen vorgenommen, da bei dieser Belastungsart der Beginn des Risswachstums im Bereich der äußerlich sichtbaren Rissspitze besonders gut zu beobachten ist.

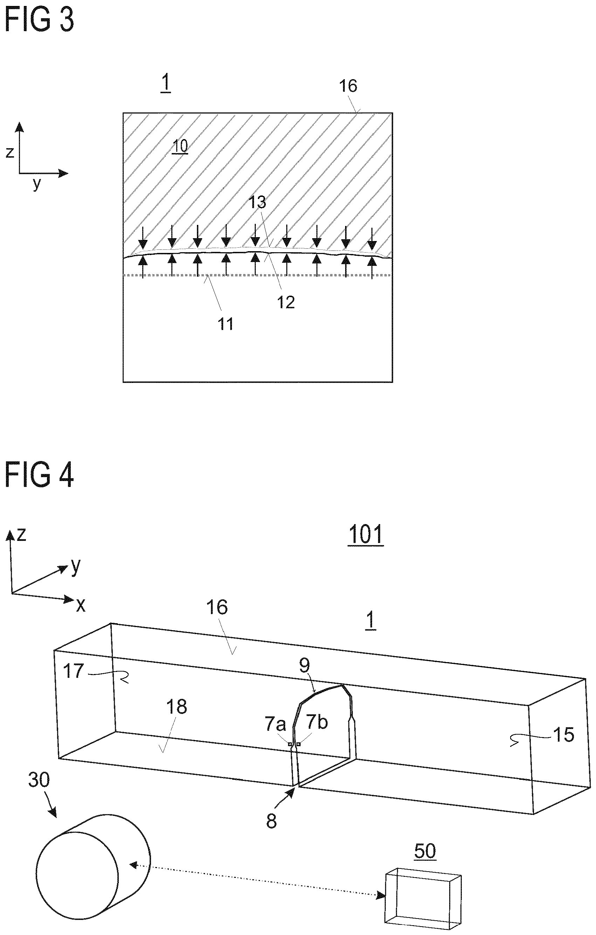

Fig. 3 zeigt schematisch eine Bruchfläche der Biegeprobe 1 nach dem dynamischen Belasten in der Vorrichtung gemäß Fig. 1. Dabei stellen die Kurven 11, 12 und 13 das Ende 11 der mechanischen Kerbung 8, das Ende 12 des feinen zusätzlichen Schwingungsanrisses 9 und das Rissende 13 zu einem Restligament 10 nach dem dynamischen Belasten dar. Der an der Bruchfläche bestimmbare Risswachstumsbetrag $\Delta a$ durch das dynamische Belasten wird in Fig. 3 durch Pfeile symbolisiert.

Wie weiter in Figur 1 dargestellt wird, kann zudem ein optionaler Sensor 5 zur Messung einer Messgröße, die mit einer Formänderung der gelagerten Biegeprobe 1 korreliert ist, nahe des Einschnitts 8, 9 appliziert und damit nahe zum Ort der erwarteten Querschnittsänderung angebracht sein. Bei dem Sensor 5 der Vorrichtung handelt es sich typischerweise um einen durchbiegungsschwingungsproportionalen Sensor (Einzel-DMS).

Der Sensor 5 und die Belastungsvorrichtung können mit einer Steuer- und Auswerteeinheit 50 verbunden sein. Wie durch die gestrichelten Pfeile in Fig. 1 dargestellt wird, kann die Steuerund Auswerteeinheit 50 die Belastungsvorrichtung steuern und vom optionalen Sensor 5 ermittelte Signale registrieren. Die Steuerung der Belastungsvorrichtung agiert typischerweise aber unabhängig vom Signal des optionalen Sensors 5.

In dem exemplarischen Ausführungsbeispiel ist die Steuer- und Auswerteeinheit 50 zudem mit vier weiteren eine Brücke bildende DMS 4 (DMS-Vollbrücke) gekoppelt, die alternativ oder ergänzend zum Sensor 5 zur Kraftmessung verwendet werden kann.

Typischerweise werden jeweils zwei der vier DMS 4 auf bzw. an der Unterseite 18 und auf bzw. an der Oberseite 16 angeordnet.

Die gewählte exemplarische Anordnung ermöglicht auf Grund der guten Synchronität der Signale des Sensors 5 und der DMS-Vollbrücke 4 eine zuverlässige Kalibrierung / Umrechnung des während des dynamischen Belastens vom Sensor 5, im Folgenden auch als Nahfeld-DMS oder kurz NF-DMS bezeichnet, gemessenen Messsignals. Dazu kann die Biegeprobe 1 nach dem Auflagern zunächst mittels der Belastungsvorrichtung (Finne 3) (quasistatisch) unterschiedlichen Kräften sicher unterhalb der erwarteten Streckgrenze ausgesetzt und dabei zur Bestimmung einer Kalibrierungskurve oder eines Kalibrierungsfaktors die Signale der DMS-Vollbrücke 4 registriert werden.

Während des dynamischen Belastens kann die Steuer- und Auswerteeinheit 50 ein Signal des Sensors 5 und/oder ein Signal der DMS-Vollbrücke 4 als ein jeweiliges zeitabhängiges Signal registrieren.

Fig. 2 zeigt die Vorrichtung 100 in einer schematischen Seitenansicht auf die der ersten Seitenfläche 15 gegenüberliegende zweite Seitenfläche 17 der Biegeprobe 1 (Rückansicht).

In dem exemplarischen Ausführungsbeispiel ist auf der zweiten Seitenfläche 17 oberhalb des Einschnitts 8, 9 eine Messmarke 21, typischerweise eine Schwarz-Weiß-Messmarke 21 zum Messen der Durchbiegung der Probe 1 beim dynamischen Belasten mittels eines elektrooptischen Wegmesssensors angebracht. Typischerweise ist Messmarke 21 in der Aufsicht zentriert bzgl. des Einschnitts 8.

Zur Ermittlung bruchmechanischer Kennwerte ist neben der zum Zeitpunkt $t_c$ innerhalb der Probe wirkenden Kraft häufig auch die sich infolge der Krafteinwirkung einstellende Durchbiegung wichtig.

Die Durchbiegung der Probe 1 kann bspw. mit einem nichtdargestellten elektrooptischen Wegmesssensor gemessen werden, der den Weg der Messmarke 21 verfolgen, zur elektronischen Registrierung in ein Spannungssignal umformen und an die Steuer- und Auswerteeinheit 50 weitergeben kann.

Die Messmarke 21 kann aber auch auf der ersten Seitenfläche 15 angeordnet sein.

Außerdem kann die Messmarke 21 dann ebenfalls als Leuchtmittel (z.B. eine LED) ausgebildet sein, deren (zeitabhängige) Position zur Bestimmung der Durchbiegung analog zur unten beschriebenen Positionsbestimmung der Markierungen 7a, 7b mittels Trackingsoftware in aufgenommen Bildern bestimmt werden kann.

Außerdem kann zu Vergleichszwecken ein RMS (Rissmessstreifen) 20 an der zweiten Seitenfläche 17 angebracht sein, der die Rissspitze 9 mit den ersten 2 bis 5 Leiterbahnen leicht überlappt.

Figur 4 zeigt eine Vorrichtung 101 zur dynamischen Belastungsprüfung der perspektivisch dargestellten Biegeprobe 1. Die Vorrichtung 100 ist ähnlich zur oben mit Bezug zu den Figuren 1 und 2 erläuterten Vorrichtung 101 und kann dieser sogar entsprechen. Aus Gründen der Übersichtlichkeit, werden in Fig. 4 jedoch nur die Markierung 7a, 7b, die Steuer- und Auswerteeinheit 50 und eine mit der Steuer- und Auswerteeinheit 50

verbundene, typischerweise als Hochgeschwindigkeits-kamera ausgeführte Bildaufnahmevorrichtung 30 darge-stellt.

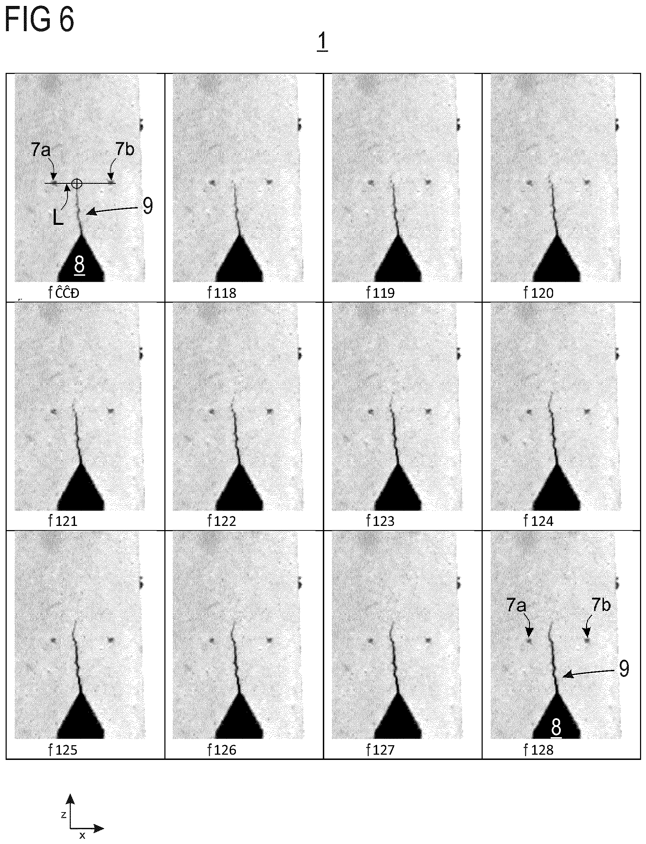

Die typischerweise von der Steuer- und Auswerteeinheit 50 ausgeführten (durchführbaren) Schritte werden im Folgenden Bezug zu Fig. 6 bis Fig. 12 detailliert erläutert.

Dabei zeigt Fig. 6 eine repräsentative (Teil-) Bilderserie f117 bis f128 (f - frame) von einer gusseisernen Biegeprobe 1, wie sie in Fig. 4 dargestellt ist, während des dynamischen Belastens. Die Bilderserie wurde mit einer Hochgeschwindigkeitskamera vom Typ Photron Fastcam SA-1, Model 675 KC und einer Bildrate von 40000 fps (Bildern pro Sekunde, von englisch frames per second) erzeugt. Dabei repräsentieren die Bildunterschriften f117 bis f128 die Bildnummer in der Bildserie. Aus Gründen der Übersichtlichkeit sind die eingeprägten $\delta$5-Marken 7a, 7b, die Kerbe 8 und der Riss 9 nur in den Bildern f117 und f128 bezeichnet. Im Bild f117 ist zudem die gedachte Verbindungslinie L zwischen der ersten Markierung 7a und der zweiten Markierung 7b mit eingezeichnet. Wie Bild f117 weiter zeigt, schneidet die die gedachte Verbindungslinie L die mit einem Fadenkreuz nachträglich im Bild markierte Spitze der Risses vor dem Einsetzen des Wachstums des Einschnitts 8, 9.

In den folgenden Bildern f118 bis f128 ist das Wachstum des Risses 9 in vertikaler Richtung z nach oben deutlich zu erkennen.

Fig. 7 zeigt den aus den in Fig. 6 teilweise gezeigten Bildern mittels einer 2D-Trackingsoftware ermittelten Abstand c zwischen den zwei Markierungen 7a, 7b der Biegeprobe 1 als Funktion der Zeit t vom Zeitpunkt des Einsetzens der dynamischen Belastung bei $t_0$=0,5388 an.

Eine genauere Analyse zeigt, dass die für die Bestimmung des Zeitpunktes der Rissinitiierung signifikante, kritische Rissaufweitung in x-Richtung längenmäßig ca. 0,050 mm beträgt. Der sprunghafte Rissaufweitungsbetrag betrug dann 0,085 mm. Die gesamte Rissaufweitung in x-Richtung betrug im exemplarisch betrachteten dynamischen 3PBT längenmäßig ca. 0,260 mm.

Mit Hilfe der Bildaufnahmerate der Kamera und des bekannten initialen Abstandes der $\delta$5Marken 7a, 7b (5 mm) kann die 2D-Tracking Software kalibriert werden. Primär wichtig ist dabei die zeitliche Kalibrierung. Die längenmäßige Kalibrierung wurde zwar durchgeführt, kann aber entfallen, da eine Relativlängenmessung des Abstands c häufig ausreicht.

Das Tracking der $\delta$5-Marken 7a, 7b kann bspw. gemäß der Pattern-Matching-Methode durchgeführt werden.

Bereits in Fig. 7 ist deutlich ein starker Anstieg des Abstands c(t) ab etwa t=0,53917 s bis t=0,53935 s zu erkennen.

Fig. 8 zeigt den aus dem in Fig. 7 dargestellten Abstand c durch numerisches Differenzieren und anschließendes, optionales Glätten (gleitender Durchschnitt oder mit einem Rechteckfilter, der die jeweils nächsten Nachbarn berücksichtigt) berechnete Änderungsrate dc/dt des Abstands c zwischen den $\delta$5-Marken 7a, 7b als Funktion der Zeit t während des dynamischen Belastens der Probe 1.

Deutlich sichtbar wird ein Peak p, der ein sprunghaftes Ansteigen der Änderungsrate dc/dt des Ab-standes c zwischen den $\delta$5-Marken 7a, 7b in der z-x-Ebene anzeigt.

Zur Fehlerbetrachtung kann ein zeitlich relativ kurzer Teil der Hochgeschwindigkeitsvideoaufzeichnung vor der Belastung mitverfolgt werden. Eine Aus-wertung dieser Trackingpositionen der $\delta$5 -Marken 7a, 7b erlaubt dann eine Angabe zum Signalrauschen der Messrichtungen zu machen. Vorliegend lag das Signalrauschen in x-Richtung bei -3,0/+3,5 $\mu$m.

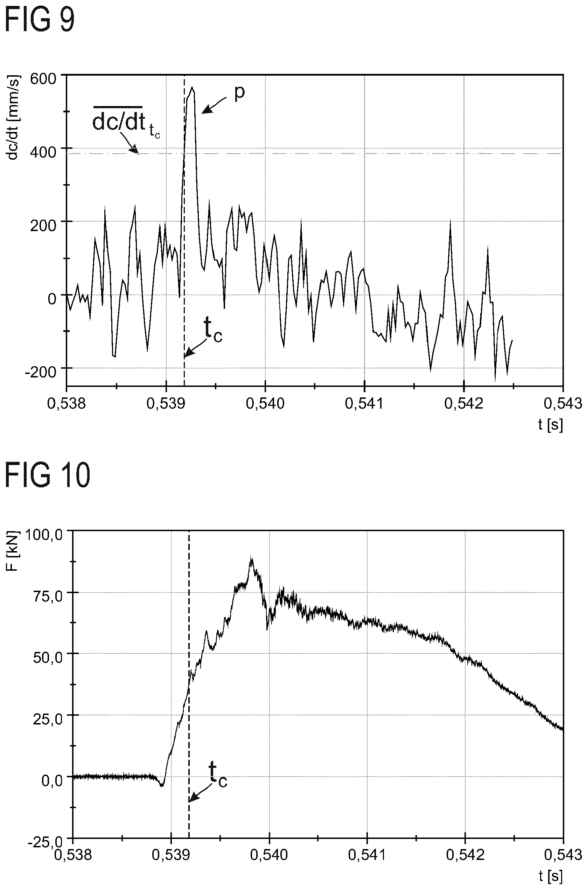

Das Maximum der Änderungsrate dc/dt liegt mit 565 mm/s bei t= 0,5392 (entspricht Bild f121 in Fig. 6). Die ansteigende Flanke des Peaks p erreicht ihren mittleren Wert (in Fig. 9 als $dc/dt_{tc}$ bezeichnet) von 385 mm/s zum Maximum der Änderungsrate dc/dt am Zeitpunkt t=$t_c$= 0,5392 (entspricht Bild f118 in Fig. 6). Dass dieser Zeitpunkt mit dem Wachstumsinitiierungszeitpunkt (Zeitpunkt der Rissinitiierung) $t_c$ identifiziert werden kann, wurde durch visuelle Analysen des Einschnitts 8, 9 in den Bildern der in Fig. 6 teilweise dargestellten Bildserie (und analogen Untersuchungen weiterer SE(B)-Proben) verifiziert. Vorliegend fällt der mittlere Wert der steigenden Flanke p zum Maximum der Änderungsrate dc/dt mit dem Wachstumsinitiierungszeitpunkt aus der visuellen Überprüfung zwischen Bild f118 und Bild f120 in Fig. 6 über die Auswertung der Einzelbilder der Hochgeschwindigkeitsvideoaufzeichnung praktisch zusammen.

In Fig. 10 wird die während des dynamischen Belastens auf die Biegeprobe 1 wirkende und mittels einer DMS-Vollbrücke (Bezugszeichen 4 in den Figuren 1, 2) Kraft F als Funktion der Zeit t dargestellt. Es ist gut zu erkennen, dass die Kraft F ihren Maximalwert deutlich nach dem für die Berechnung von bruchmechanischen Materialkennwerten wichtigen Wachstumsinitiierungszeitpunkt $t_c$ erreicht.

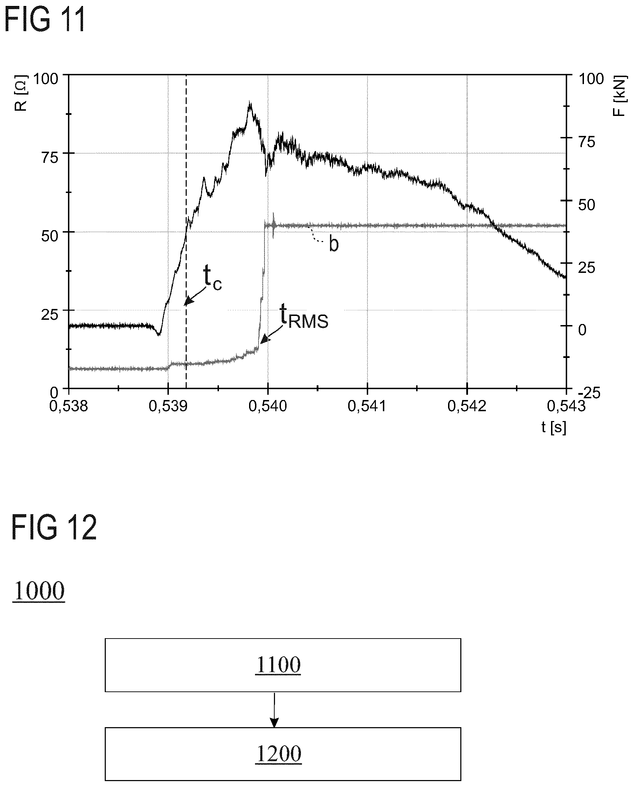

Fig. 11 zeigt zusätzlich die mit dem in Fig. 2 dargestellten RMS 20 parallel ermittelten Widerstand R in Ohm als Funktion der Zeit dar. Das herkömmliche RMS-Verfahren liefert einen Zeitpunkt der Rissinitiierung von $t_{RMS}$ = 0,5399 s, der zeitlich sogar noch kurz nach dem Erreichen des Kraftmaximums liegt. Der geringfügig erscheinenden Unterschied von 0,7 ms zu dem Wachstumsinitiierungszeitpunkt $t_c$, wie er über die Änderungsrate dc/dt des Abstands c bestimmt wird, kann jedoch zu signifikanten Abweichungen bei den bruchmechanischen Kennwerten (insbesondere der $K_{Ic}$ -Werte) der Einzeluntersuchungswerte von typischerweise bis zu 50% führen.

Jedoch ist der durch das RMS-Verfahren ermittelte Wert als kritisch zu bewerten, da Bauteile aus diesem Material bei der durch das RMS-Verfahren angesetzten Energieeinleitung und Dynamik bereits deutlich vor Erreichen dieser Beanspruchung versagen könnten.

Die auf dem Wachstumsinitiierungszeitpunkt $t_c$ beruhenden bruchmechanischen Kennwerte sind insbesondere bei dynamischen Belastungsprüfungen, die Spaltbruchereignisse hervorrufen wesentlich zuverlässiger und oft auch, wie in diesem Beispiel konservativer. Im Ergebnis können Angaben zum Schädigungs- bzw. zum Versagensverhalten von Materialproben bei dynamischer Beanspruchung genauer und zuverlässiger erfolgen und dadurch die Bauteilsicherheit dynamisch beanspruchter Bauteile erhöht werden. Dies gilt auch für den low-blow-Belastungsbereich für den entsprechende (nichtdargestellte) Resultate erzielt wurden.

Fig. 12 illustriert ein Prüfverfahren 1000 als Blockschema.

In einem Block 1100 wird eine Biegeprobe dynamisch belastet. Die Biegeprobe weist eine erste Seitenfläche, einen sich bis zur ersten Seitenfläche erstreckenden Einschnitt, eine auf und/oder an der ersten Seitenfläche angeordnete erste Markierung und eine auf und/oder an der ersten Seitenfläche angeordnete zweite Markierung. In einer Aufsicht und/oder einer Projektion auf die erste Seitenfläche liegt ein Endbereich des Einschnitts auf einer gedachten Verbindungslinie zwischen der ersten Markierung und der zweiten Markierung. Ein sich während des dynamischen Belastens ändernder Abstand zwischen der ersten Markierung und der zweiten Markierung wird bestimmt. Zum Bestimmen eines Zeitpunktes des Einsetzens eines Wachstums des Einschnitts (Rissinitiierungszeitpunkt) wird eine Änderungsrate des Abstands mit der Zeit zwischen der ersten Markierung und der zweiten Markierung in einem Block 1200 bestimmt.

Typischerweise wird die Änderungsrate des Abstands und der Zeitpunkt des Einsetzens des Wachstums numerisch bestimmt.

Typischerweise wird der Zeitpunkt des Einsetzens des Wachstums als diejenige Zeit bestimmt, bei der die ansteigende Flanke der Änderungsrate zum globalen Maximum der Änderungsrate einem mittleren Wert der Änderungsrate der Flanke entspricht.

Gemäß einem Ausführungsbeispiel umfasst ein Verfahren zur dynamischen Belastungsprüfung ein dynamisches Belasten einer Biegeprobe 1 aufweisend einen Einschnitt 8, 9, eine auf und/oder an der Biegeprobe 1 angeordnete erste Markierung 7a, und eine auf und/oder an der Biegeprobe 1 angeordnete zweite Markierung 7b, wobei in einer Aufsicht auf die Biegeprobe 1 ein Endbereich des Einschnitts 8,9 eine gedachte Verbindungslinie L zwischen der ersten Markierung 7a und der zweiten Markierung 7b schneidet oder tangiert, und ein Bestimmen eines Zeitpunktes $t_c$ des Einsetzens eines Wachstums des Einschnitts 8, 9 umfassend Bestimmen einer Änderungsrate eines sich während des dynamisches Belastens ändernden Abstands c zwischen der ersten Markierung 7a und der zweiten Markierung 7b.

Gemäß einem Ausführungsbeispiel umfasst ein Verfahren zur dynamischen Belastungsprüfung ein Bereitstellen einer Biegeprobe aufweisend eine erste Seitenfläche, einen sich bis zur ersten Seitenfläche erstreckenden Einschnitt, der Kerbe und/oder einen Riss aufweisen kann, eine auf und/oder an der ersten Seitenfläche angeordnete erste Markierung und eine auf und/oder an der ersten Seitenfläche angeordnete zweite Markierung, wobei in einer Aufsicht auf die erste Seitenfläche ein Endbereich des Einschnitts auf einer gedachten Verbindungslinie zwischen der ersten Markierung und der zweiten Markierung liegt. Die bereitgestellte Biegeprobe wird dynamisch belastet und während des dynamischen Belastens ein (sich dabei ändernder) Abstand zwischen der ersten Markierung und der zweiten Markierung (als Funktion der Zeit) bestimmt, typischerweise gemessen. Es wird eine Änderungsrate des Abstands zwischen der ersten Markierung und der zweiten Markierung (als Funktion der Zeit) bestimmt, typischerweise berechnet. Unter Verwendung der bestimmten Änderungsrate wird ein Zeitpunkt des Einsetzens eines (nichtreversiblen) Wachstums des Einschnitts, bestimmt, typischerweise berechnet.

Die vorliegende Erfindung wurde anhand von Ausführungsbeispielen erläutert. Diese Ausführungsbeispiele sollen keinesfalls als einschränkend für die vorliegende Erfindung verstanden werden. Insbesondere können einzelne Merkmale der verschiedenen Ausführungsbeispiele in andere Ausführungsformen übernommen werden oder verschiedene Ausführungsbeispiele miteinander kombiniert werden, solange sich die kombinierten Merkmale nicht technisch bedingt gegenseitig ausschließen.

**Patentansprüche**

1. Verfahren (1000) zur dynamischen Belastungsprüfung, umfassend:

    - Dynamisches Belasten einer Biegeprobe (1) aufweisend eine erste Seitenfläche (15), einen sich bis zur ersten Seitenfläche (15) erstreckenden Einschnitt (8, 9), eine auf und/oder an der ersten Seitenfläche (15) angeordnete erste Markierung (7a), und eine auf und/oder an der ersten Seitenfläche (15) angeordnete zweite Markierung (7b), wobei in einer Aufsicht auf die erste Seitenfläche (15) ein Endbereich des Einschnitts (8, 9) auf einer gedachten Verbindungslinie (L) zwischen der ersten Markierung (7a) und der zweiten Markierung (7b) liegt, sowie Bestimmen eines sich während des dynamischen Belastens ändernden Abstands (c) zwischen der ersten Markierung (7a) und der zweiten Markierung (7b), umfassend Aufnehmen von Bildern, die jeweils die erste Markierung (7a) und die zweite Markierung (7b) zeigen, mit einer Bildaufnahmevorrichtung (30) während des dynamischen Belastens; und

- Bestimmen eines Zeitpunktes ($t_c$) des Einsetzens eines Wachstums des Einschnitts (8, 9), umfassend Bestimmen einer Änderungsrate (dc/dt) des Abstands (c).

2. Verfahren nach Anspruch 1, wobei der Einschnitt eine Kerbe (8) und/oder einen Riss (9) umfasst, wobei der Riss (9) ein Ermüdungsriss ist, wobei sich der Riss von der Kerbe (8) aus in die Biegeprobe (1) erstreckt, wobei vor dem dynamisches Belasten die Verbindungslinie in der Aufsicht einen Endbereich des Einschnitts (8, 9) und/oder einen von der Kerbe (8) abgewandt angeordneten Endbereich des Risses tangiert, wobei vor dem dynamischen Belasten die Verbindungslinie in der Aufsicht den von der Kerbe (8) abgewandt angeordneten Endbereich des Risses schneidet, wobei der Endbereich des Einschnitts (8,9) vor dem dynamischen Belasten einen ersten Abstand zu der ersten Markierung (7a) aufweist, der nicht mehr als 20 % von einem zweiten Abstand des Endbereichs des Einschnitts (8,9) zu der zweiten Markierung (7b) abweicht und/oder wobei die erste Markierung und die zweite Markierung nicht direkt miteinander verbunden sind.

3. Verfahren nach einem der vorangehenden Ansprüche, wobei der Abstand (c) zwischen der ersten Markierung (7a) und der zweiten Markierung (7b) optisch bestimmt wird, und/oder wobei die Bildaufnahmevorrichtung (30) eine Kamera (30) umfasst, und/oder wobei das Bestimmen eine Auswertung der von der Bildaufnahmevorrichtung aufgenommenen Bilder umfasst.

4. Verfahren nach einem der vorangehenden Ansprüche, wobei der Abstand (c) zwischen der ersten Markierung (7a) und der zweiten Markierung (7b) während des dynamisches Belastens mit einer zeitlichen Auflösung von mehr als 40 kHz, von zumindest 50 kHz und/oder sogar mindestens 54 kHz bestimmt wird, und/oder wobei der Abstands (c) zwischen der ersten Markierung (7a) und der zweiten Markierung (7b) in einer durch die ersten Seitenfläche (15) definierten Ebene während des dynamischen Belastens mit einer die Messgenauigkeit von zumindest 10 $\mu$m bestimmt wird.

5. Verfahren nach einem der vorangehenden Ansprüche, wobei das dynamische Belasten der Biegeprobe (1) schlag-bzw. impulsartig erfolgt, und/oder wobei das dynamische Belasten in einer Richtung (z) erfolgt, die parallel zur ersten Seitenfläche (15) ist.

6. Verfahren nach einem der vorangehenden Ansprüche, weiter umfassend Bestimmen einer zum Zeitpunkt ($t_c$) des Einsetzens des Wachstums des Einschnitts (8, 9) auf die Biegeprobe (1) wirkenden Kraft, Bestimmen einer Durchbiegung der Biegeprobe (1) zum Zeitpunkt ($t_c$) des Einsetzens des Wachstums des Einschnitts (8, 9), und/oder Bestimmen eines bruchmechanischen Materialkennwerts unter Verwendung der zum Zeitpunkt ($t_c$) auf die Biegeprobe (1) wirkenden Kraft.

7. Verfahren nach einem der vorangehenden Ansprüche, wobei die Änderungsrate des Abstands (c) durch nummerisches Differenzieren des Abstands (c) nach der Zeit (t) bestimmt wird.

8. Verfahren nach einem der vorangehenden Ansprüche, wobei der Zeitpunkt ($t_c$) als eine Zeit (t) bestimmt wird, bei der eine ansteigende Flanke der Änderungsrate zu einem globalen Maximum der Änderungsrate einem mittleren Wert der Änderungsrate der Flanke ($dc/dt_{tc}$) entspricht.

9. Verfahren nach einem der vorangehenden Ansprüche, umfassend vor dem dynamischen Belasten der Biegeprobe (1) mindestens einen der folgenden Schritte:

   - Bereitstellen der Biegeprobe;
   - Bereitstellen eines Probekörpers der Biegeprobe aufweisend die erste Seitenfläche (15);
   - Versehen der ersten Seitenfläche (15) mit der ersten Markierung (7a) und/oder der zweiten Markierung (7b);
   - Erzeugen der ersten Markierung (7a) und/oder der zweiten Markierung (7b) an der ersten Seitenfläche (15) umfassend einen Prägeprozess;
   - Anbringen eines ersten Leuchtmittels an/und oder auf der ersten Seitenfläche (15) als erste Markierung (7a);
   - Anbringen eines zweiten Leuchtmittels an/und oder auf der ersten Seitenfläche (15) als zweite Markierung (7a);
   - Erzeugen einer Kerbe (8) in der Biegeprobe (1);
   - Erzeugen des Risses (9) als Ermüdungsrisses an einer Kante der Kerbe (8);
   - Erzeugen des Risses (9) mit einer vorgegebenen Länge;
   - Anbringen einer optischen Messmarke (21) an/und oder auf der ersten Seitenfläche (15) oberhalb des erstreckenden Einschnitts (8, 9);
   - Auflagern der Biegeprobe (1) an zwei Stellen; und
   - Bestimmen eines Signals des Abstands (c) zwischen der ersten Markierung und der zweiten Markierung.

10. Vorrichtung (100, 101) zur dynamischen Belastungsprüfung, umfassend:

    - eine Probenaufnahme (2) zur Lagerung einer Biegeprobe (1) aufweisend eine erste Seitenfläche (15), einen sich bis zur ersten Seitenfläche (15) erstreckenden Einschnitt (8, 9), eine auf und/oder an der ersten Seitenfläche (15) angeordnete erste Markierung (7a), und eine auf und/oder an der ersten Seitenfläche (15) angeordnete zweite Markierung (7b), wobei in einer Aufsicht auf die erste Seitenfläche (15) ein Endbereich des Einschnitts (8,9) auf einer gedachten Verbindungslinie (L) zwischen der ersten Markierung (7a) und der zweiten Markierung (7b) liegt;
- eine Belastungsvorrichtung (3), die eingerichtet ist, die in der Probenaufnahme (2) gelagerte Biegeprobe (1) mit einer Biegekraft ($F_d$) dynamisch zu belasten;
- eine Bildaufnahmevorrichtung (30), die eingerichtet ist, Bilder von zumindest einem Abschnitt der ersten Seitenfläche (15) der in der Probenaufnahme (2) gelagerten Biegeprobe (1) aufzunehmen, so dass auch die erste Markierung (7a) und die zweite Markierung (7b) abgebildet werden; und
- eine Steuer- und Auswerteeinheit (50), die mit der Belastungsvorrichtung (3) und der Bildaufnahmevorrichtung (30) gekoppelt ist und eingerichtet ist:
- ein dynamisches Belasten der Biegeprobe (1) mittels der Belastungsvorrichtung (3) auszulösen;
- eine Bild- oder Bilderserienaufnahme der Bildaufnahmevorrichtung (30) auszulösen;
- in während des dynamischen Belastens von der Bildaufnahmevorrichtung (30) aufgenommenen und an die Steuer- und Auswerteeinheit (50) übertragenen Bilder einen jeweiligen Abstand (c) zwischen der ersten Markierung (7a) und der zweiten Markierung (7b) zu bestimmen; und
- zum Bestimmen eines Zeitpunktes ($t_c$) des Einsetzens eines Wachstums des Einschnitts (8, 9) eine Änderungsrate des Abstands (c) zu bestimmen.

11. Vorrichtung nach Anspruch 10, wobei die Steuer- und Auswerteeinheit (50) eingerichtet ist, ein Verfahren nach einem der Ansprüche 1 bis 9 auszuführen.

12. Vorrichtung nach Anspruch 10 oder 11, wobei die Belastungsvorrichtung (3) ein geführtes Fallwerk, ein freies Fallwerk oder ein Pendelschlagwerk umfasst.

13. Vorrichtung nach einem der Ansprüche 10 bis 12, wobei die Bildaufnahmevorrichtung (30) eine Kamera ist.

14. Vorrichtung nach Anspruch 13, wobei die Kamera (30) eine Hochgeschwindigkeitskamera ist.

15. Vorrichtung nach einem der Ansprüche 10 bis 14, wobei die Vorrichtung einen kalibrierbaren Kraftsensor aufweist, wobei die Vorrichtung einen Wegmesssensor für eine oberhalb des Einschnitt (8, 9) an der Biegeprobe (1) angeordnete Messmarke (21) aufweist, und/oder wobei die Messmarke (21), die erste Markierung (7a) und/oder die zweite Markierung (7a) von einem jeweilige Leuchtmittel, insbesondere einer LED gebildet werden.

**Claims**

1. A method (1000) for dynamic load testing, the method comprising:

   - dynamically loading a bending specimen (1) comprising a first lateral surface (15), an incision (8, 9) extending to the first lateral surface (15), a first marking (7a) provided on and/or at the first lateral surface (15), and a second marking (7b) provided on and/or at the first lateral surface (15), wherein, in a top view onto the first lateral surface (15), an end region of the incision (8, 9) is located on an imaginary connecting line (L) between the first marking (7a) and the second marking (7b), and determining a distance (c) between the first marking (7a) and the second marking (7b), which changes during the dynamically loading, comprising recording images showing the first marking (7a) and the second marking (7b) with an image acquisition device (30) during the dynamically loading; and
   - determining a time ($t_c$) of an onset of a growth of the incision (8, 9), comprising determining a rate of change (dc/dt) of the distance (c).

2. The method according to claim 1, wherein the incision encompasses a notch (8) and/or a crack (9), wherein the crack (9) is a fatigue crack, wherein the crack extends from the notch (8) into the bending specimen (1), wherein the connecting line, in the top view, is tangent to an end region of the incision (8, 9) and/or an end region of the crack facing away from the notch (8) prior to the dynamically loading, wherein the connecting line, in the top view, intersects the end region of the crack facing away from the notch (8) prior to the dynamically loading, wherein the end region of the incision (8, 9), prior to the dynamically loading, comprises a first distance with respect to the first marking (7a) which deviates by no more than 20% from a second distance of the end region of the incision (8, 9) with respect to the second marking (7b), and/or wherein the first marking and the second marking are not directly connected to one another.

**3.** The method according to any one of the preceding claims, wherein the distance (c) between the first marking (7a) and the second marking (7b) is optically determined, and/or wherein the image acquisition device (30) comprises a camera (30), and/or wherein the determining comprises evaluating the images recorded by the image acquisition device.

**4.** The method according to any one of the preceding claims, wherein the distance (c) between the first marking (7a) and the second marking (7b) is determined during the dynamically loading at a temporal resolution of more than 40 kHz, of at least 50 kHz and/or even at least 54 kHz, and/or wherein the distance (c) between the first marking (7a) and the second marking (7b) in a plane defined by the first lateral surface (15) is determined during the dynamically loading with a measuring accuracy of at least 10 μm.

**5.** The method according to any one of the preceding claims, wherein the dynamically loading the bending specimen (1) is carried out in a burst-like or impulse-like manner, and/or wherein the dynamically loading is carried out in a direction (z) parallel to the first lateral surface (15).

**6.** The method according to any one of the preceding claims, further comprising determining a force acting on the bending specimen (1) at the time ($t_c$) of the onset of the growth of the incision (8, 9), determining a deflection of the bending specimen (1) at the time ($t_c$) of the onset of the growth of the incision (8, 9), and/or determining a fracture mechanics material characteristic value, using the force acting on the bending specimen (1) at the time ($t_c$).

**7.** The method according to any one of the preceding claims, wherein the rate of change of the distance (c) is determined by numerically differentiating the distance (c) with respect to the time (t).

**8.** The method according to any one of the preceding claims, wherein the time ($t_c$) is determined as a time (t) at which a rising edge of the rate of change to a global maximum of the rate of change corresponds to an average value of the rate of change of the edge $(\overline{dc/dt_{tc}})$.

**9.** The method according to any one of the preceding claims, comprising at least one of the following steps prior to dynamically loading the bending specimen (1):

- providing the bending specimen;
- providing a sample body of the bending specimen comprising the first lateral surface (15);
- applying the first marking (7a) and/or the second marking (7b) to the first lateral surface (15);
- creating the first marking (7a) and/or the second marking (7b) at the first lateral surface (15), comprising an embossing process;
- attaching a first luminous element at and/or to the first lateral surface (15) as the first marking (7a);
- attaching a second luminous element at and/or to the first lateral surface (15) as the second marking (7a);
- creating a notch (8) in the bending specimen (1);
- creating the crack (9) as a fatigue crack at an edge of the notch (8);
- creating the crack (9) at a predefined length;
- providing an optical measuring mark (21) at and/or to the first lateral surface (15) above the extending incision (8, 9);
- supporting the bending specimen (1) at two locations; and
- determining a signal of the distance (b) between the first marking and the second marking.

**10.** A device (100, 101) for dynamic load testing, comprising:

- a specimen holder (2) for mounting a bending specimen (1) comprising a first lateral surface (15), an incision (8, 9) extending to the first lateral surface (15), a first marking (7a) provided on and/or at the first lateral surface (15), and a second marking (7b) provided on and/or at the first lateral surface (15), wherein, in a top view onto the first lateral surface (15), an end region of the incision (8, 9) is located on an imaginary connecting line (L) between the first marking (7a) and the second marking (7b);
- a load application device (3), which is configured to dynamically load the bending specimen (1) mounted in the specimen holder (2) with a bending force ($F_d$);
- an image acquisition device (30), which is configured to record images of at least a section of the first lateral surface (15) of the bending specimen (1) mounted in the specimen holder (2) so that the first marking (7a) and the second marking (7b) are also recorded; and
- a control and evaluation unit (50), which is coupled to the load application device (3) and the image acquisition device (30) and configured:
- to trigger the application of a dynamic load to the bending specimen (1) using the loading device (3);
- to trigger an image or image series recording of the image acquisition device (30);
- to determine a respective distance (c) between the first marking (7a) and the second marking (7b) in images recorded by the image acquisition device (30) during the dynamic load application and transmitted to the control and evaluation unit (50); and

- determine a rate of change of the distance (c) for determinating of a point in time ($t_c$) of an onset of a growth of the incision (8, 9).

11. The device according to claim 10, wherein the control and evaluation unit (50) is configured to carry out the method according to any one of claims 1 to 9.

12. The device according to claim 10 or 11, wherein the load application device (3) comprises a guided drop-weight impact system, a free drop-weight impact system or an impact pendulum system.

13. The device according to any one of claims 10 to 12, wherein the image acquisition device (30) is a camera.

14. The device according to claim 13, wherein the camera (30) is a high speed camera.

15. The device according to any one of claims 10 to 14, wherein the device comprises a calibratable force sensor, wherein the device comprises a path measuring sensor for a measuring mark (21) situated above the incision (8, 9) at the bending specimen (1), and/or wherein the measuring mark (21), the first marking (7a) and/or the second marking (7a) are formed by a respective luminous element, in particular an LED.

**Revendications**

1. Procédé (1000) d'essai de charge dynamique, comprenant :

- un chargement dynamique d'une éprouvette de flexion (1) comprenant une première face latérale (15), une incision (8, 9) s'étendant jusqu'à la première face latérale (15), un premier marquage (7a) disposé sur et/ou au niveau de la première face latérale (15) et un deuxième marquage (7b) disposé sur et/ou au niveau de la première face latérale (15), dans lequel, dans une vue de dessus de la première face latérale (15), une zone d'extrémité de l'incision (8, 9) se trouve sur une ligne de liaison imaginaire (L) entre le premier marquage (7a) et le deuxième marquage (7b), et une détermination d'une distance (c), variable pendant le chargement dynamique, entre le premier marquage (7a) et le deuxième marquage (7b), comprenant une prise de vues qui montrent respectivement le premier marquage (7a) et le deuxième marquage (7b), avec un dispositif de prise de vues (30), pendant le chargement dynamique ; et
- une détermination d'un temps ($t_c$) de début de croissance de l'incision (8, 9), comprenant la détermination d'un taux de variation (dc/dt) de la distance (c).

2. Procédé selon la revendication 1, dans lequel l'incision comprend une encoche (8) et/ou une fissure (9), dans lequel la fissure (9) est une fissure de fatigue, dans lequel la fissure s'étend à partir de l'encoche (8) dans l'éprouvette de flexion (1), dans lequel, avant le chargement dynamique, la ligne de liaison, dans la vue de dessus, est tangente à une zone d'extrémité de l'incision (8, 9) et/ou à une zone d'extrémité de la fissure éloignée de l'encoche (8), dans lequel, avant le chargement dynamique, la ligne de liaison, dans la vue de dessus, coupe la zone d'extrémité de la fissure disposée à l'opposé de l'encoche (8), dans lequel la zone d'extrémité de l'incision (8, 9) présente, avant le chargement dynamique, une première distance par rapport au premier marquage (7a), qui n'est pas différente de plus de 20 % d'une deuxième distance de la zone d'extrémité de l'incision (8, 9) par rapport au deuxième marquage (7b) et/ou dans lequel le premier marquage et le deuxième marquage ne sont pas reliés directement entre eux.

3. Procédé selon l'une des revendications précédentes, dans lequel la distance (c) entre le premier marquage (7a) et le deuxième marquage (7b) est déterminée de manière optique, et/ou dans lequel le dispositif de prise de vues (30) comprend une caméra (30) et/ou dans lequel la détermination comprend une analyse des images prises par le dispositif de prise de vues.

4. Procédé selon l'une des revendications précédentes, dans lequel la distance (c) entre le premier marquage (7a) et le deuxième marquage (7b) est déterminée, pendant le chargement dynamique, avec une résolution temporelle supérieure à 40 kHz, d'au moins 50 kHz et/ou même d'au moins 54 kHz et/ou dans lequel la distance (c) entre le premier marquage (7a) et le deuxième marquage (7b) est déterminée dans un plan défini par la première face latérale (15) pendant le chargement dynamique avec une précision de mesure d'au moins 10 $\mu$m.

5. Procédé selon l'une des revendications précédentes, dans lequel le chargement dynamique de l'éprouvette de flexion (1) a lieu par à-coups respectivement par impulsions et/ou dans lequel le chargement dynamique a lieu dans une direction (z) parallèle à la première face latérale (15).

6. Procédé selon l'une des revendications précédentes, comprenant en outre la détermination d'une force agissant sur l'éprouvette de flexion (1) au temps ($t_c$) du début de la croissance de l'incision (8, 9), la détermination d'une flexion de l'éprouvette de flexion (1) au temps ($t_c$) du début de la croissance de l'incision (8, 9) et/ou la détermination d'une valeur caractéristique de rupture de matériau à l'aide de la force agissant au temps ($t_c$) sur l'éprouvette de flexion (1).

7. Procédé selon l'une des revendications précédentes, dans lequel le taux de variation de la distance (c) est déterminée par une différence numérique de la distance (c) en fonction du temps (t).

8. Procédé selon l'une des revendications précédentes, dans lequel le temps ($t_c$) est déterminé comme un temps (t) où un flanc ascendant du taux de variation par rapport à un maximum global du taux de variation correspond à une valeur moyenne du taux de variation du flanc $\overline{(dc/dt_{tc})}$.

9. Procédé selon l'une des revendications précédentes, comprenant, avant le chargement dynamique de l'éprouvette de flexion (1), au moins une des étapes suivantes :

   - mise à disposition de l'éprouvette de flexion ;
   - mise à disposition d'un corps d'éprouvette de l'éprouvette de flexion comprenant la première face latérale (15) ;
   - réalisation du premier marquage (7a) et du deuxième marquage (7b) sur la première face latérale (15) ;
   - réalisation du premier marquage (7a) et/ou du deuxième marquage (7b) sur la première face latérale (15) comprenant un processus d'estampage ;
   - pose d'un premier moyen d'éclairage au niveau et/ou sur la première face latérale (15) en tant que premier marquage (7a) ;
   - pose d'un deuxième moyen d'éclairage au niveau et/ou sur la première face latérale (15) en tant que deuxième marquage (7a) ;
   - réalisation d'une encoche (8) dans l'éprouvette de flexion (1) ;
   - réalisation de la fissure (9) sous la forme d'une fissure de fatigue sur une arête de l'encoche (8) ;
   - réalisation de la fissure (9) avec une longueur prédéterminée ;
   - pose d'une marque de mesure optique (21) au niveau et/ou sur la première face latérale (15) au-dessus de l'incision (8, 9) ;
   - appui de l'éprouvette de flexion (1) à deux endroits ; et
   - détermination d'un signal de la distance (c) entre le premier marquage et le deuxième marquage.

10. Dispositif (100, 101) pour un essai de charge dynamique, comprenant :

    - un logement d'éprouvette (2), pour le logement d'un éprouvette de flexion (1) comprenant une première face latérale (15), une incision (8, 9) s'étendant jusqu'à la première face latérale (15), un premier marquage (7a) disposé sur et/ou au niveau de la première face latérale (15) et un deuxième marquage (7b) disposé sur et/ou au niveau de la première face latérale (15), dans lequel, dans une vue de dessus de la première face latérale (15), une zone d'extrémité de l'incision (8, 9) se trouve sur une ligne de liaison imaginaire (L) entre le premier marquage (7a) et le deuxième marquage (7b) ;
    - un dispositif d'application de charge (3) qui est conçu pour solliciter de manière dynamique l'éprouvette de flexion (1) logé dans le logement d'éprouvette (2) avec une force de flexion ($F_d$) ;
    - un dispositif de prise de vues (30) qui est conçu pour prendre des images d'au moins une partie de la première face latérale (15) de l'éprouvette (1) logée dans le logement d'éprouvette (2), de façon à ce que le premier marquage (7a) et le deuxième marquage (7b) soient également représentés ; et
    - une unité de commande et d'analyse (50) qui est couplée avec le dispositif d'application de charge (3) et le dispositif de prise de vues (30) et qui est configuré pour :
    - déclencher un chargement dynamique de l'éprouvette de flexion (1) au moyen du dispositif d'application de charge (3) ;
    - déclencher la prise d'une image ou d'une série d'images du dispositif de prise de vues (30) ;
    - déterminer, dans les images prises pendant le chargement dynamique par le dispositif de prise de vues (30) et transmises à l'unité de commande et d'analyse (50), une distance (c) respective entre le premier marquage (7a) et le deuxième marquage (7b) ; et
    - déterminer, au temps ($t_c$) du début d'une croissance de l'incision (8, 9), d'un taux de variation de la distance (c).

11. Dispositif selon la revendication 10, dans lequel l'unité de commande et d'analyse (50) est conçue pour exécuter un procédé selon l'une des revendications 1 à 9.

12. Dispositif selon la revendication 10 ou 11, dans lequel le dispositif d'application de charge (3) comprend une tour de chute guidée, une tour de chute libre ou un mécanisme de frappe pendulaire.

13. Dispositif selon l'une des revendications 10 à 12, dans lequel le dispositif de prise de vues (30) est une caméra.

**14.** Dispositif selon la revendication 13, dans lequel la caméra (30) est une caméra à grande vitesse.

**15.** Dispositif selon l'une des revendications 10 à 14, dans lequel le dispositif comprend un capteur de force étalonnable, dans lequel le dispositif comprend un capteur de mesure de déplacement pour une marque de mesure (21) disposée au-dessus de l'incision (8, 9) sur l'éprouvette de flexion (1) et/ou dans lequel la marque de mesure (21), le premier marquage (7a) et/ou le deuxième marquage (7b) sont constitué d'un moyen d'éclairage respectif, plus particulièrement d'une LED.

FIG 1

FIG 2

# FIG 3

# FIG 4

FIG 5A

FIG 5B

FIG 5C

# FIG 6

_1_

FIG 7

FIG 8

## FIG 9

## FIG 10

# FIG 11

# FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3044841 A1
- WO 2011157261 A2

- DE 102017112776

**In der Beschreibung aufgeführte Nicht-Patentliteratur**

- **D. D. ANDERSON ; A. J. ROSAKIS.** Comparison of three real time techniques for the measurement of dynamic fracture initiation toughness in metals. *Engineering Fracture Mechanics,* 2005, vol. 72, 535-555